# FASCICULE DE BREVET EUROPEEN

(11) **EP 0 660 841 B1**
(45) Date de publication et mention de la délivrance du brevet: **26.05.1999**
(21) Numéro de dépôt: 94922283.0
(22) Date de dépôt: 20.07.1994
(51) Int. Cl.: C07F 9/572, G01N 33/84

(54) **NITRONES UTILISABLES POUR LE PIEGEAGE DES RADICAUX LIBRES**
NITRONE VERWENDBAR ZUM ABFANGEN VON FREIEN RADIKALEN
NITRONES USEFUL FOR TRAPPING FREE RADICALS

(30) Priorité: 20.07.1993 FR 9308906
(43) Date de publication de la demande: 05.07.1995
(73) Titulaire: Etablissement Public dit: CENTRE NATIONAL DE LA RECHERCHE SCIENTIFIQUE (CNRS), 75007 Paris (FR)
(72) Inventeur: BARBE FREJAVILLE, Claudine, Marie, Clémence, F-13100 Aix-en-Provence (FR); KAROUI, Hakim, F-13013 Marseille (FR); LE MOIGNE, François Bâtiment A6, F-13012 Marseille (FR); CULCASI, Marcel, F-34090 Montpellier (FR); PIETRI, Sylvia, F-34090 Montpellier (FR); TORDO, Paul, F-13004 Marseille (FR)
(74) Mandataire: Le Guen, Gérard
(86) Numéro de dépôt international: FR9400909
(87) Numéro de publication internationale: WO9503314

(56) Documents cités:
- DE-A- 2 126 954
- GB-A- 2 225 015

## Description

La présente invention concerne des dérivés de nitrones cycliques utilisables comme pièges à radicaux libres.

Un certain nombre de nitrones cycliques capables de piéger des radicaux libres sont connus à cette date : La 5,5-diméthyl-pyrroline-N-oxyde (DMPO) est commercialisé en Europe par différentes sociétés, telles qu'ALDRICH, FLUKA et SIGMA. Ce composé, capteur de radicaux libres, est utilisé uniquement dans des expériences de Résonance Paramagnétique Electronique. Son application dans les domaines pharmaceutique et cosmétologique est limitée en raison de son instabilité, de sa faible solubilité dans les milieux biologiques, ainsi que de l'instabilité de ses adduits de piégeage.

M.J. TURNER et G.M. ROSEN décrivent par ailleurs, dans leur article paru dans J. Med. Chem. 29 (12), 2439-2444 (1986), trois nitrones cycliques qui se sont révélées des pièges à radicaux libres plus efficaces que le DMPO, à savoir la 5-butyl-5-méthyl-1-pyrroline-1-oxyde (BMPO), la 5,5-dipropyl-1-pyrroline-1-oxyde (DPPO) et la 2-aza-2-cyclopentènespirocyclopentane-2-oxyde (CPPO). Toutefois, la solubilité de ces composés dans les milieux biologiques est insuffisante au vu de leurs propriétés lipophiles très supérieures à celles du DMPO.

On a maintenant découvert de nouvelles nitrones cycliques présentant une grande stabilité, une meilleure solubilité dans les milieux biologiques, et conduisant à la formation d'adduits de piégeage comparativement plus stables.

L'invention a pour objet des nitrones cycliques de formule générale I : 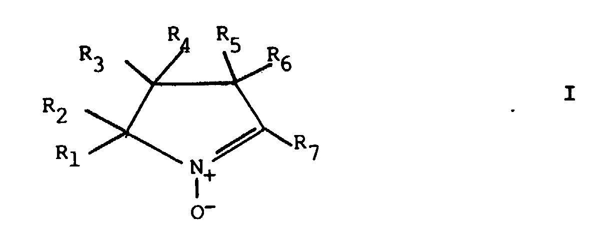 dans laquelle :
R₁ représente un phényle ou bien un (C₁-C₁₈)alkyle,
R₂ représente un atome d'hydrogène, de deutérium, un groupe phényle, (C₁-C₁₈)alkyle, un radical Z₁ de formule 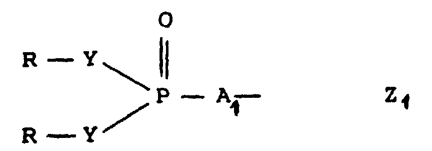 dans laquelle :
   A₁ est une simple liaison, un groupe méthylène, ou un groupe oxaméthylène (où l'atome d'oxygène est lié à l'atome de phosphore du radical Z₁), Y représente un atome d'oxygène et R représente un atome d'hydrogène, un (C₁-C₁₈)alkyle ou un (C₆-C₁₈)aryle, ou bien Y représente un groupe méthylène et R représente un atome d'hydrogène, un (C₁-C₁₇)alkyle, ou un (C₆-C₁₈)aryle.
   R₃, R₄ et R₅ représentent indépendamment l'un de l'autre un atome d'hydrogène, de deutérium, un groupe phényle ou (C₁-C₁₈)alkyle, et
   R₆ représente un atome d'hydrogène, de deutérium, un groupe phényle, (C₁-C₁₈)alkyle, ou un radical Z₂ de formule 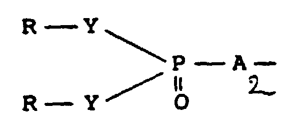
   A₂ représentant une simple liaison et Y et R étant tels que définis précédemment,
   R₇ représente un atome d'hydrogène, de deutérium ou un groupe méthyle,
   sous réserve que lorsque R2 représente Z₁, R₆ ne représente pas Z₂,
   ainsi que leurs sels correspondants physiologiquement acceptables obtenus par action d'une base minérale ou organique.

Un groupe de composés de formule I préférés est constitué par les composés de formule II suivante : 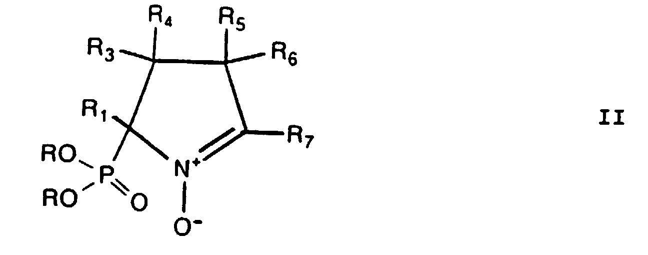 dans laquelle :
R représente un atome d'hydrogène, un (C₁-C₁₈)alkyle ou un (C₆-C₁₈)aryle,
R₁ représente un phényle ou bien un (C₁-C₁₈)alkyle, R₃, R₄, R₅ et R₆ représentent indépendamment les uns des autres un atome d'hydrogène, de deutérium, un groupe phényle ou un (C₁-C₁₈)alkyle, et
R₇ représente un atome d'hydrogène, de deutérium ou un groupe méthyle.

Avantageusement, R₁ représente un groupe méthyle et R₇ est un atome d'hydrogène ou de deutérium.

Parmi ces composés préférés, on peut citer les suivants :
la 5-diéthoxyphosphoryl-5-méthyl-1-pyrroline-1-oxyde (DEPMPO),
la 5-phosphono-5-méthyl-1-pyrroline-1-oxyde, et
la 5-diéthoxyphosphoryl-5-méthyl-(2,3,3-²H₃)-1-pyrroline-1-oxyde (DEPMPO_{D}).

Par groupe (C₁-C₁₇)alkyle et (C₁-C₁₈)alkyle, on entend les groupes à chaîne linéaire ou ramifiée possédant respectivement de 1 à 17 atomes de carbone ou de 1 à 18 atomes de carbone.

Par groupe (C₆-C₁₈)aryle, on entend des composés mono- ou polycycliques aromatiques comprenant de 6 à 18 atomes de carbone.

Les sels physiologiquement acceptables sont ceux formés par action d'une base minérale ou organique sur les composés de formule I ou II.

Comme sels préférés, on peut citer les sels de sodium des acides phosphoniques de formule I ou II.

Les composés de l'invention peuvent être préparés par un procédé qui consiste à oxyder au moyen d'un agent oxydant approprié un composé de formule générale III : 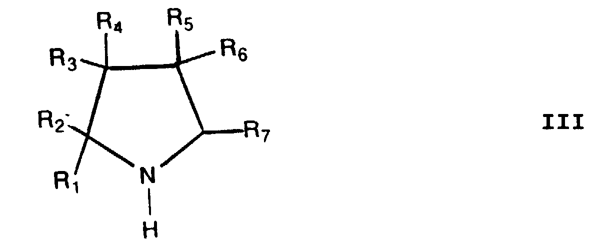 dans laquelle R₁, R₂, R₃, R₄, R₅, R₆ et R₇ sont tels que définis ci-dessus.

Dans cette réaction, l'agent oxydant peut être avantageusement un peracide organique tel que l'acide m-chloroperbenzoïque, un oxydant minéral tel que le tungstate de sodium, ou bien toute combinaison d'oxyde minéral et de peroxyde d'hydrogène tel que l'oxyde de sélénium en présence de peroxyde d'hydrogène, ou bien encore un agent oxydant organique tel que le diméthyl dioxiranne.

Les conditions réactionnelles dépendent de la nature de l'agent oxydant sélectionné, et il est à la portée de l'homme du métier de les déterminer à l'aide de ses connaissances générales de base. Ainsi, lorsque l'oxydation a lieu par action d'un peracide organique, on choisira un solvant inerte comme par exemple le dichlorométhane ou le chloroforme. Lorsque l'oxydant est le peroxyde d'hydrogène en solution aqueuse en présence d'un oxyde minéral, on optera pour un solvant aprotique polaire, comme par exemple l'acétone.

La température peut varier en fonction de la nature du composé de formule III. Elle est avantageusement comprise entre 0°C et la température de reflux du solvant.

Les composés de formule générale III dans laquelle R₁ représente le radical 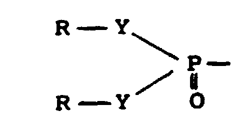 où R et Y sont tels que définis précédemment, peuvent être préparés par un procédé qui consiste à faire réagir une halogénocétone de formule générale IV : 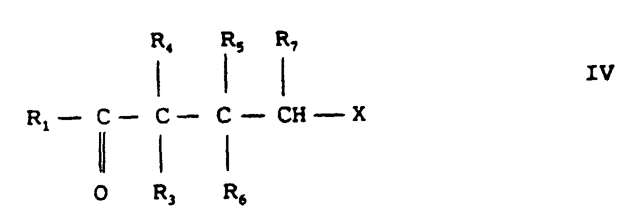 dans laquelle X représente un halogène tel que le chlore, le brome ou l'iode, et R₁, R₃, R₄, R₅, R₆ et R₇ sont tels que définis ci-dessus, sous réserve que le groupe R₆ ne représente pas le radical Z₂ de formule 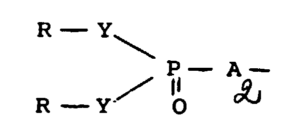 A₂ représentant une simple liaison et R et Y étant tels que définis précédemment, avec un composé de formule V : 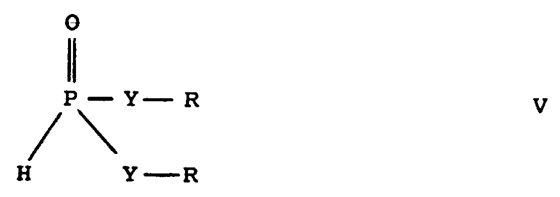 où Y et R ont la même signification que ci-dessus, en présence de NH₃.

Là encore les conditions réactionnelles dépendent de la nature des réactifs de formule IV et V et peuvent être aisément déterminées par l'homme du métier. On conduit généralement la réaction dans un solvant protique polaire. Avantageusement, le solvant sera l'éthanol. La température pourra être comprise entre la température ambiante et la température de reflux du solvant.

Les composés de formule IV et V sont des composés disponibles dans le commerce ou pouvant être préparés par l'homme du métier à l'aide de méthodes connues.

Les composés de formule générale III dans laquelle R₂ représente un radical 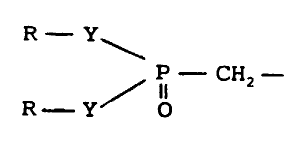 peuvent être préparés par un procédé qui consiste à
a) faire réagir sur le composé correspondant de formule VI 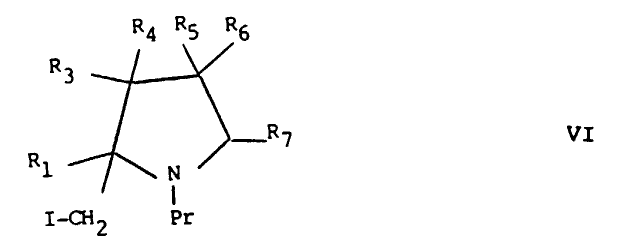 dans laquelle R₁, R₃, R₄, R₅, R₆ et R₇ sont tels que définis précédemment, sous réserve que le groupe R₆ ne représente pas le radical Z₂ de formule 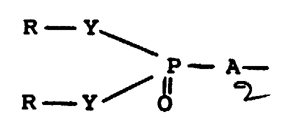 A₂ représentant une simple liaison et R et Y étant tels que définis précédemment, et Pr est un groupe protecteur de la fonction amine, comme par exemple le groupe benzyloxycarbonyle, un dérivé du phosphore de formule P(YR)₃ où Y et R sont tels que définis précédemment,
b) puis déprotéger la fonction amine secondaire par l'une des méthodes connues de l'homme du métier.

Les composés de formule VI peuvent être préparés en deux étapes à partir des composés suivants de formule VIII : 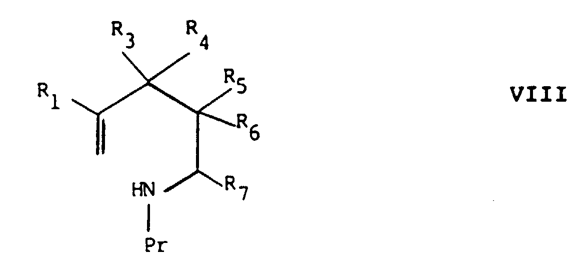 dans laquelle R₁, R₃, R₄, R₅, R₆, R₇ et Pr sont tels que définis pour le composé VI.

Dans une première étape, on fait réagir un composé de formule VIII avec du diacétate de mercure ; la deuxième étape, qui consiste à traiter le produit résultant, successivement par de l'iodure de potassium puis de l'iode, conduit directement au composé de formule VI correspondant.

Les composés de formule VIII sont facilement préparés par l'homme du métier à l'aide de méthodes connues à partir de composés disponibles dans le commerce.

Les composés de formule générale III dans laquelle R₁ représente un radical 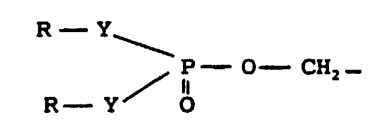 peuvent être préparés par un procédé qui consiste à :
a) faire réagir sur le composé correspondant de formule IX 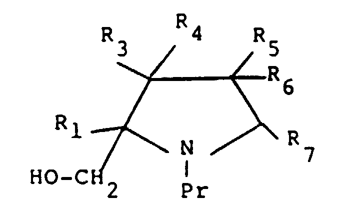 dans laquelle R₁, R₃, R₄, R₅, R₆, R₇ et Pr sont tels que définis précédemment, sous réserve que le groupe R₆ ne représente pas le radical Z₂ de formule 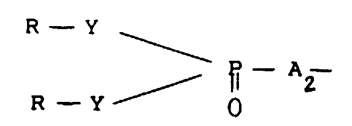 A₂ représentant une simple liaison et R et Y étant tels que définis précédemment, un composé de formule X 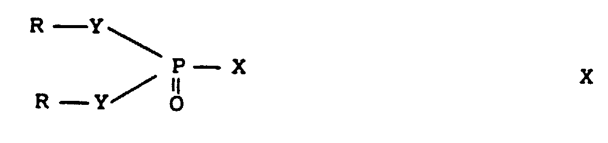 dans laquelle X représente un halogène tel que le chlore et R et Y sont tels que définis précédemment.
b) puis déprotéger la fonction amine secondaire par l'une des méthodes connues de l'houe du métier.

La préparation des composés de formule IX est réalisée en deux étapes à partir des composés correspondants de formule VIII :

On fait réagir dans un premier temps le composé de formule VIII avec un diacétate de mercure. Dans la deuxième étape, le produit résultant est traité par de l'oxygène en présence d'un hydrure tel que le borohydrure de potassium, pour conduire au composé attendu de formule IX.

La préparation des composés de formule I dans laquelle R₆ représente un radical 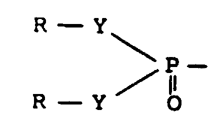 où R et Y sont tels que définis précédemment, peut être réalisée au moins de deux façons différentes.

Un premier procédé de synthèse consiste à traiter par de l'hydrure de sodium le composé de formule XI correspondant : 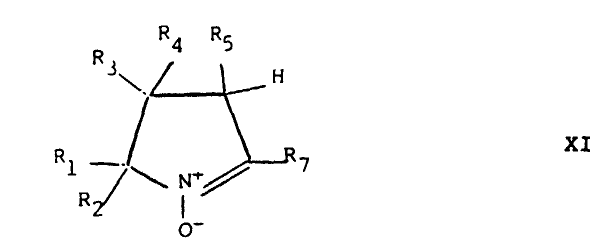 dans laquelle R₁, R₂, R₃, R₄, R₅ et R₇ sont tels que définis précédemment, sous réserve que R₁ ne représente pas un groupe Z₁ 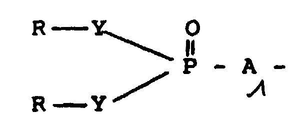 R et Y étant tels que définis précédemment et A₁ représentant une simple liaison, un groupe méthylène ou un groupe oxaméthylène (où l'atome d'oxygène est lié à l'atome de phosphore du radical Z₁), puis à faire réagir le sel de sodium résultant avec un composé de formule X.

Dans le second procédé de synthèse, un composé de formule XI est successivement traité par la N-bromo-succinimide et un composé de formule P(YR)₃ dans laquelle Y et R sont tels que définis précédemment. Lorsque le composé de formule I visé est tel que Y est un atome d'oxygène, cette réaction est connue sous le nom de réaction d'Arbuzov.

Les composés de formule XI sont préparés au moyen d'un agent oxydant à partir des composés correspondants de formule III. La méthode utilisée a été détaillée ci-dessus.

Les composés de formule générale I pour lesquels Y est un atome d'oxygène et R est un atome d'hydrogène peuvent être obtenus à partir des composés correspondants de formule I dans laquelle R est un alkyle par action d'un halogénure de triméthylsilyle tel que le bromure de triméthylsilyle dans des conditions anhydres, puis hydrolyse aqueuse. Dans cette réaction, un solvant inerte aprotique pourra être utilisé. On peut citer le dichlorométhane et le chloroforme comme solvants préférés. La température dépend du composé de formule I considéré et pourra varier entre la température ambiante et la température de reflux du solvant.

Les composés de formule I pour lesquels un ou plusieurs des radicaux choisis parmi R₂, R₃, R₄, R₅, R₆ et R₇ représentent un atome de deutérium sont préparés à partir des composés de même formule dans lesquels les atomes de deutérium sont remplacés par des atomes d'hydrogène, par action de deutéroxyde de sodium (NaOD) dans l'eau lourde (D₂O). La température réactionnelle dépend de la nature du composé considéré de formule I. Elle pourra être choisie indifféremment entre 0°C et la température de reflux de l'eau lourde.

Les composés de l'invention sont utilisables comme pièges à radicaux libres. En tant que tels, et du fait de leurs propriétés physico-chimiques, ils trouvent une application en cosmétologie et dans le domaine médical.

Dans le milieu biologique humain, plusieurs espèces oxygénées réactives, des prooxydants du type O₂^{·-}, HO^{·}, HOO^{·}, peuvent être formées à partir de l'oxygène véhiculé dans l'organisme par la respiration. En situation normale, une concentration stationnaire faible de ces espèces est contrôlée par une série d'antioxydants, enzymatiques ou non enzymatiques, qui assurent leur élimination.

Une situation de stress oxydatif s'établit lorsqu'il existe entre antioxydants et prooxydants un déséquilibre local en faveur de ces derniers. Des situations de stress oxydatif ont été mises en évidence dans le cas de diverses pathologies cardio-vasculaires telles que l'ischémie coronarienne, l'artériosclérose, l'infarctus, ainsi que dans le cas de circulation extracorporelle mise en oeuvre en chirurgie vasculaire ou encore lors de processus inflammatoires, infectieux ou de vieillissement cellulaire.

Les composés selon l'invention sont des pièges efficaces à radicaux libres qui peuvent être utilisés en cosmétologie comme capteurs des espèces prooxydantes responsables du vieillissement cellulaire.

En médecine, et plus particulièrement dans le domaine du diagnostic, les composés selon l'invention sont utiles dans l'évaluation du stress oxydatif. La détection directe des radicaux libres O₂^{·-}, HOO^{·} et HO^{·} générés in vivo n'est pas possible par Résonnance Paramagnétique Electronique (RPE), malgré leur magnétisme de spin non nul, du fait de leur instabilité : ces radicaux présentent en effet une durée de demi-vie de l'ordre de 10⁻⁵ à 10⁻³ seconde.

Le spin-trapping est la technique utilisée pour la détection de ces radicaux. Son principe est le suivant : le milieu biologique à tester est placé en présence d'un piège à radicaux libres P. Si des radicaux libres tels que O₂^{·-}, HO^{·} ou HOO^{·} sont présents dans le milieu, ils se combinent au piège P pour former un adduit (P--O₂)^{·-}, (P--OH)^{·} ou (P--OOH)^{·}. Cet adduit est paramagnétique de manière persistante et peut donc être détecté par Résonance Paramagnétique Electronique (RPE).

Vis-à-vis des radicaux libres, les composés selon l'invention se sont révélés des pièges efficaces permettant la détection par RPE des radicaux libres prooxydants dans les milieux biologiques.

L'utilisation des composés selon l'invention comme capteurs ou pièges à radicaux libres offre de nombreux avantages. On citera la stabilité de ces composés et leur solubilité dans les milieux biologiques.

Les inventeurs ont également pu démontrer que la cinétique de piégeage de radicaux libres tels que HOO· par les composés de l'invention est bien plus rapide que dans le cas de la 5,5-diméthyl-pyrroline-N-oxyde (DMPO) de l'état de la technique.

La réaction de capture du radical HOO· par la DMPO est lente et caractérisée par une constante de vitesse du second ordre, k, de 10 M⁻¹ s⁻¹ ; la formation in vivo du radical superoxyde est par conséquent difficilement détectée par la DMPO. A l'inverse, la vitesse de capture du radical HOO· par la 5-diéthoxy-phosphoryl-5-méthyl-1-pyrroline-1-oxyde (DEPMPO), composé selon l'invention, est 2,5 fois plus rapide.

D'autre part, lors de la détection de HOO· par la DMPO, plusieurs auteurs ont signalé la décomposition de l'adduit (DMPO--OOH)· en adduit (DMPO--OH)·. Il en résulte une faible fiabilité des expériences de spin-trapping réalisées à partir de la DMPO.

Inversement, dans le cas de la DEPMPO, composé selon l'invention, aucune décomposition de l'adduit (DEPMPO--OOH)· en adduit (DMPO--OH)· n'a été observée.

La stabilité des adduits obtenus à partir des composés selon l'invention est encore prouvée par les expériences qualitative et quantitative suivantes :

### Test de congélation - décongélation :

La possibilité de stockage d'échantillons de sang, prélevés sur des patients se trouvant dans diverses situations pouvant impliquer l'existence de stress oxydatif (en chirurgie cardio-vasculaire avec circulation extracorporelle, ou dans le cas d'infarctus du myocarde) est essentielle en vue d'une utilisation dans le domaine médical. Dans le cas des composés selon l'invention, l'addition du radical piégeur peut être réalisée avant congélation et stockage à 77 K des échantillons de sang, en raison de la grande stabilité des adduits de piégeage, comme le montre l'expérience suivante :

Les adduits de piégeage de la DEPMPO et des radicaux O₂·⁻ et HOO· ont été analysés par Résonnance Paramagnétique Electronique après stockage à 77K et décongélation. Leur spectre s'est révélé identique à celui des adduits avant congélation, démontrant ainsi leur bonne stabilité.

A l'inverse, la même expérience à partir d'adduits de la DMPO a conduit à l'apparition de nombreux signaux parasites gênant l'interprétation des spectres RPE des adduits décongelés.

### Etude cinétique de la décomposition des adduits nitrone - (O₂·⁻ / HOO· ) :

Dans cette expérience, les radicaux (O₂·⁻ / HOO·) ont été produits par irradiation dans le visible en présence du système riboflavine (0,1 mM) - DTPA (4 mM) dans un tampon phosphate 0,1 M (pH = 7) à température ambiante.

Les nitrones étudiées sont ajoutées à la solution irradiée dans une concentration de 0,08 M.

A l'arrêt de l'irradiation, la production des radicaux O₂·⁻ / HOO· cesse et la décroissance des adduits [nitrones - (O₂·⁻ / HOO·)] est suivie par analyse RPE.

La variation de la concentration en adduits a été étudiée en fonction du temps, dans le cas des nitrones DMPO (de l'art antérieur) et DEPMPO (de l'invention) . Les valeurs de la concentration en adduits ont été relevées après 2, 10, 20, 30, et 40 minutes. Ces valeurs sont rapportées au Tableau I.

**TABLEAU I**

| **TEMPS (Minutes)** | **Concentration en adduits (DMPO)-(O**_{**2**}**·**^{**-**}**/HOO·)** | **Concentration en adduits (DEPMPO)-(O**_{**2**}**·**^{**-**}**/HOO·)** |
|---|---|---|
| 0 | 100 | 100 |
| 2 | 50 | 91 |
| 10 | 0 | 68 |
| 20 | 0 | 52 |
| 30 | 0 | 42 |
| 40 | 0 | 28 |

Les cinétiques de disparition des adduits sont du premier ordre dans les deux cas. Les constantes de vitesse calculées sont respectivement :
k_{DMPO} = 1,4 10⁻² s⁻¹
k_{DEPMPO} = 1,4 10⁻³ s⁻¹

Il ressort de la présente étude que le temps de demi-vie des adduits [(DEPMPO) - (HOO· / O₂·⁻)] est dix fois plus grand que celui des adduits [(DMPO) - (HOO· / O₂·⁻)].

L'invention a également pour objet une composition destinée à être utilisée en cosmétologie, contenant à titre d'ingrédient actif un composé selon l'invention : les produits de formule générale I sont associés à des excipients, des arômes et des colorants adéquats, pour former par exemple des aérosols, solutions, crèmes ou pommades.

Un autre objet de l'invention est un produit de diagnostic utilisable dans l'évaluation du stress oxydatif, comprenant un composé selon l'invention.

Les exemples suivants illustrent l'invention à titre non limitatif. Dans les données de résonnance magnétique nucléaire (R.M.N. ), les déplacements chimiques 6 sont exprimés en p.p.m. par rapport au TMS.

### EXEMPLE 1

### 5-diéthoxyphosphoryl-5-méthyl-1-pyrroline-1-oxyde

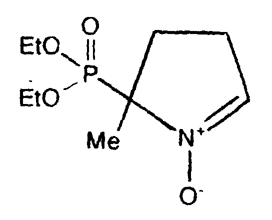

### a) (2-méthylpyrrolidin-2-yl)phosphonate de diéthyle

Une solution de 11,8 g de 5-chloropentan-2-one et de 14 g de diéthylphosphite dans 50 ml d'éthanol est maintenue à 50°C et sous un flux d'ammoniac pendant 4 heures. Le mélange réactionnel est ensuite filtré et le solvant évaporé. Le résidu est repris par 40 ml d'une solution HCl 2N puis extrait par du chlorure de méthylène (2 x 50 ml). La phase aqueuse est neutralisée par addition de bicarbonate de sodium et extraite au chloroforme. Cette phase organique est séchée sur sulfate de sodium. L'évaporation du solvant sous pression réduite conduit à 13,7 g d'une huile incolore.

### b) 5-diéthoxyphosphoryl-5-méthyl-1-pyrroline-1-oxyde

A une solution de 2 g de la pyrrolidine précédente dans 30 ml de chloroforme refroidie à 0°C, est ajoutée goutte à goutte une solution de 4,4 g d'acide m-chloroperbenzoïque 70% dans 40 ml de chloroforme. Le mélange réactionnel est ensuite lavé avec une solution saturée de bicarbonate de sodium (2 x 15 ml) puis de chlorure de sodium (15 ml). La phase organique est séchée sur sulfate de sodium puis concentrée sous pression réduite. Le résidu, chromatographié (silice, CH₂Cl₂/E-tOH:85/15), donne 0,4 g d'une huile jaune.

### EXEMPLE 2

### 5-phosphono-5-méthyl-1-pyrroline-1-oxyde

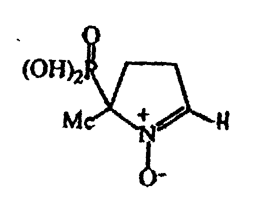

On ajoute à 300 mg de 5-diéthoxyphosphoryl-5-méthyl-1-pyrroline-1-oxyde en solution dans 5 ml de dichlorométhane sec, 0,67 ml de bromure de triméthylsilyle. Le mélange est chauffé à reflux pendant 20 heures. Le chlorure de méthylène est évaporé sous pression réduite. Le résidu est hydrolysé par 0,8 ml d'eau dans 6 ml d'acétone. Le précipité est filtré et lavé avec de l'acétone (15 ml) et recristallisé dans le diméthylsulfoxyde pour donner 137 mg d'une poudre blanche.

### EXEMPLE 3

### 5-diéthoxyphosphoryl-2,5-diméthyl-1-pyrroline-1-oxyde

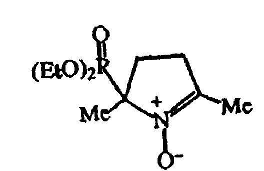

A une solution de 8,61 g de 5-diéthoxyphosphoryl-2,5-diméthyl-1-pyrrolidine et 0,21 g de SeO₂ dans 72 ml d'acétone, on ajoute goutte à goutte à 0°C, sous argon, 12,06 g d'une solution aqueuse de peroxyde d'hydrogène 30 %. Après addition, le mélange réactionnel est laissé sous agitation à température ambiante pendant 30 heures. L'acétone est éliminée sous pression réduite. La phase aqueuse est extraite avec du dichlorométhane. La phase organique est séchée sur sulfate de sodium puis concentrée sous pression réduite. Le résidu, chromatographié sur colonne (silice, CH₂Cl₂/EtOH : 90/10), conduit à 2,1 g d'une huile jaune.

### EXEMPLE 4

### 5-diéthoxyphosphoryl-5-méthyl-(2,3,3-²H₃)-1-pyrroline-1-oxyde (DEPMPO_{D})

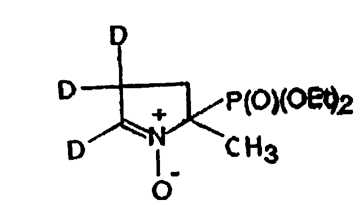

A une solution de 0,5 g de 5-diéthoxyphosphoryl-5-méthyl-1-pyrroline-1-oxyde dans 3 ml d'eau lourde, D₂O, on ajoute lentement une solution de deutéroxyde de sodium (NaOD 8N dans D₂O, 0,2 ml) dans 10 ml d'eau lourde, D₂O, préalablement refroidie. La réaction s'effectue sous atmosphère inerte (argon) et isolée de la lumière à température ambiante. On suit la réaction par RMN. Après 24 heures, on note la disparition du signal du proton éthylénique. Le milieu réactionnel est alors extrait au dichlorométhane (3 x 10 ml) fraîchement distillé sur anhydride phosphorique (P₂O₅). La phase organique est ensuite évaporée sous pression réduite. On obtient 0,3 g d'une huile résiduelle jaune.

## Revendications

1. Composés de formule générale I : 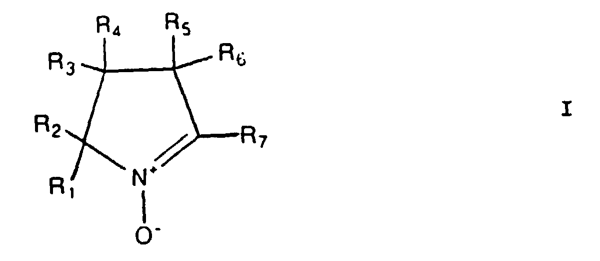 dans laquelle :
R₁ représente un phényle ou bien un (C₁-C₁₈)alkyle,
R₂ représente un atome d'hydrogène, de deutérium, un groupe phényle, (C₁-C₁₈)alkyle, un radical Z₁ de formule 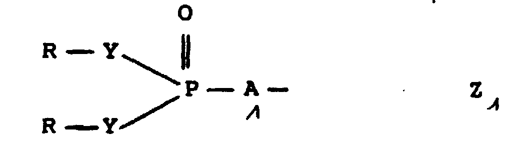 dans laquelle :
A₁ est une simple liaison, un groupe méthylène ou un groupe oxaméthylène (où l'atome d'oxygène est lié à l'atome de phosphore du radical Z₁), Y représente un atome d'oxygène et R représente un atome d'hydrogène, un (C₁-C₁₈)alkyle ou un (C₆-C₁₈)aryle, ou bien Y représente un groupe méthylène et R représente un atome d'hydrogène, un (C₁-C₁₇)alkyle ou un (C₆-C₁₈)aryle,
R₃, R₄ et R₅ représentent indépendamment l'un de l'autre un atome d'hydrogène, de deutérium, un groupe phényle ou (C₁-C₁₈)alkyle, et
R₆ représente un atome d'hydrogène, de deutérium, un groupe phényle, (C₁-C₁₈)alkyle, ou un radical Z₂ de formule 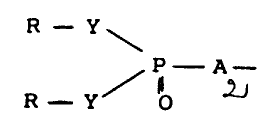
A₂ représentant une simple liaison et Y et R étant tels que définis précédemment,
R₇ représente un atome d'hydrogène, de deutérium ou un groupe méthyle,
sous réserve que lorsque R₂ représente Z₁, R₆ ne représente pas Z₂ ainsi que leurs sels correspondants physiologiquement acceptables obtenus par action d'une base minérale ou organique.

2. Composés selon la revendication 1, de formule II : 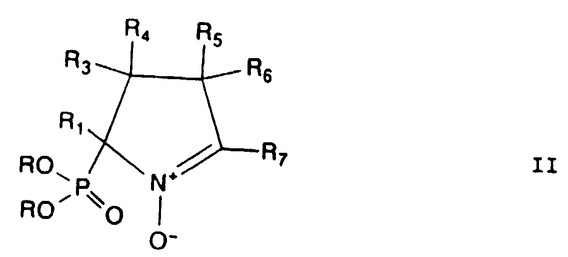 dans laquelle :
R représente un atome d'hydrogène, un (C₁-C₁₈)alkyle ou un (C₆-C₁₈)aryle,
R₁ représente un phényle ou bien un (C₁-C₁₈)alkyle,
R₃, R₄, R₅ et R₆ représentent indépendamment les uns des autres un atome d'hydrogène, de deutérium, un groupe phényle ou (C₁-C₁₈)alkyle, et
R₇ représente un atome d'hydrogène, de deutérium ou un groupe méthyle.

3. Composés de formule II selon la revendication 2, dans laquelle R₁ est un groupe méthyle et R₇ est un atome d'hydrogène ou de deutérium.

4. Composé selon l'une quelconque des revendications 1 à 3, caractérisé en ce qu'il est choisi parmi :
la 5-diéthoxyphosphoryl-5-méthyl-1-pyrroline-1-oxyde,
la 5-phosphono-5-méthyl-1-pyrroline-1-oxyde,
la 5-diéthoxyphosphoryl-5-méthyl-(2,3,3-²H₃)-1-pyrroline-1-oxyde.

5. Procédé de préparation des composés de formule générale I
selon la revendication 1, caractérisé en ce que l'on oxyde un composé de formule générale III 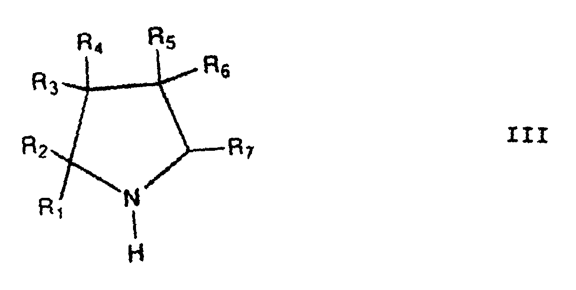 dans laquelle R₁ à R₇ ont la même signification que ci-dessus.

6. Procédé selon la revendication 5, dans lequel l'agent oxydant est l'acide m-chloroperbenzoïque.

7. Procédé selon la revendication 5, dans lequel l'agent oxydant est le système peroxyde d'hydrogène/oxyde de sélénium.

8. Procédé selon la revendication 5, dans lequel l'agent oxydant est le diméthyldioxiranne.

9. Procédé selon la revendication 5, dans lequel l'agent oxydant est le tungstate de sodium.

10. Procédé de préparation des composés de formule générale I 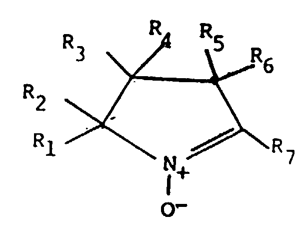 dans laquelle
R₁ représente un phényle ou bien un (C₁-C₁₈)alkyle,
R₂, R₃, R₄ et R₅ représentent indépendamment l'un de l'autre un atome d'hydrogène, de deutérium, un groupe phényle ou (C₁-C₁₈)alkyle, et
R₆ représente un radical Z₂ de formule 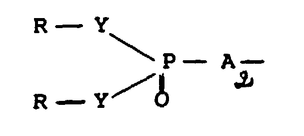 dans lequel A₂ représente une simple liaison, et lorsque Y représente un atome d'oxygène R représente un atome d'hydrogène, un (C₁-C₁₈)alkyle ou un (C₆-C₁₈)aryle, ou bien lorsque Y représente un groupe méthylène R représente un atome d'hydrogène, un (C₁-C₁₇)alkyle ou un (C₆-C₁₈)aryle, ainsi que leurs sels correspondants physiologiquement acceptables obtenus par action d'une base minérale ou organique, caractérisé en ce que le composé correspondant de formule XI 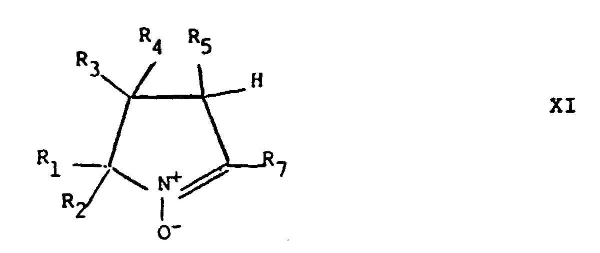 dans laquelle R₁ à R₇ sont tels que définis précédemment, est traité
i) soit par de l'hydrure de sodium avant d'être mis à réagir avec un composé de formule X 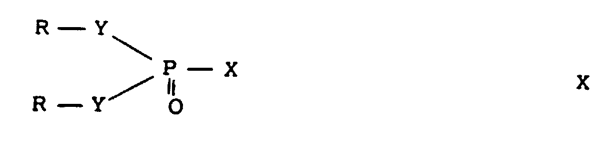 dans laquelle X représente un halogène et R et Y sont tels que définis précédemment,
ii) soit successivement par la N-Bromosuccinimide et un composé de formule P(YR)₃ dans laquelle Y et R sont tels que définis précédemment.

11. Composition destinée à être utilisée en cosmétologie, comprenant à titre d'ingrédient actif au moins un composé selon l'une quelconque des revendications 1 à 4.

12. Composition de diagnostic utilisable dans l'évaluation du stress oxydatif comprenant au moins un composé selon l'une quelconque des revendications 1 à 4.

13. Kit de diagnostic pour l'évaluation du stress oxydatif, caractérisé en ce qu'il comprend au moins un composé selon l'une des revendications 1 à 4.

## Patentansprüche

1. Verbindungen der allgemeinen Formel I: 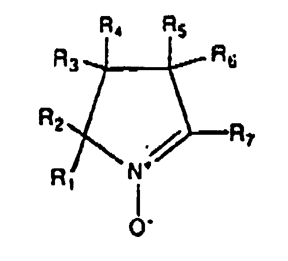 darstellt, worin:
R₁ einen Phenyl- oder (C₁-C₁₈)-Alkylrest darstellt,
R₂ ein Wasserstoffatom, ein Deuteriumatom, eine Phenylgruppe, einen (C₁-C₁₈)-Alkylrest, einen Rest Z₁ der Formel 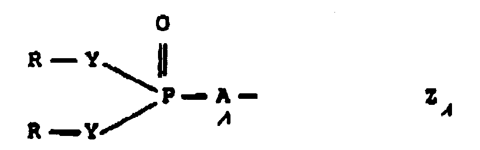 worin:
A₁ eine Einfachbindung, eine Methylengruppe oder eine Oxamethylengruppe ist (in der das Sauerstoffatom an das Phosphoratom des Restes Z₁ gebunden ist), Y ein Sauerstoffatom darstellt und R ein Wasserstoffatom, einen (C₁-C₁₈)-Alkylrest oder einen (C₆-C₁₈)-Arylrest darstellt oder Y eine Methylengruppe darstellt und R ein Wasserstoffatom, einen (C₁-C₁₇)-Alkyl- oder (C₆-C₁₈)-Arylrest darstellt,
R₃, R₄ und R₅ unabhängig voneinander ein Wasserstoffatom, ein Deuteriumatom, eine Phenylgruppe oder einen(C₁-C₁₈)-Alkylrest darstellen, und
R₆ ein Wasserstoffatom, ein Deuteriumatom, eine Phenylgruppe, einen (C₁-C₁₈)-Alkylrest oder einen Rest Z₂ der Formel darstellt 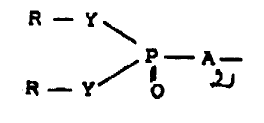
A₂ eine Einfachbindung darstellt und Y und R wie vorstehend definiert sind,
R₇ ein Wasserstoffatom, ein Deuteriumatom oder eine Methylgruppe darstellt,
mit der Maßgabe, daß, wenn R₂ Z₁ darstellt, R₆ nicht Z₂ darstellt,
sowie ihre entsprechenden physiologisch verträglichen Salze, die durch Einwirkung einer anorganischen oder organischen Base erhalten werden.

2. Verbindungen nach Anspruch 1, der Formel II: 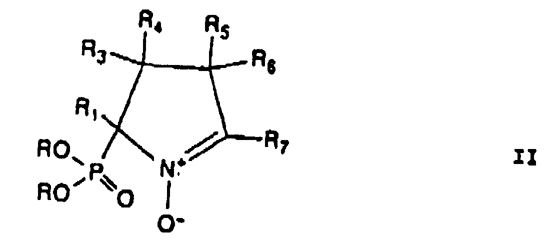 worin:
R ein Wasserstoffatom, einen (C₁-C₁₈)-Alkylrest oder einen (C₆-C₁₈)-Arylrest darstellt,
R₁ einen Phenyl- oder (C₁-C₁₈)-Alkylrest darstellt,
R₃, R₄, R₅ und R₆ unabhangig voneinander ein Wasserstoffatom, ein Deuteriumatom, eine Phenylgruppe oder einen(C₁-C₁₈)-Alkylrest darstellen, und
R₇ ein Wasserstoffatom, ein Deuteriumatom oder eine Methylgruppe darstellt.

3. Verbindungen der Formel II nach Abspruch 2, worin R₁ eine Methylgruppe und R₇ ein Wasserstoff- oder Deuteriumatom ist.

4. Verbindung nach einem der Anspruchs 1 bis 3, dadurch gekennzeichnet, daß sie ausgewählt ist aus: 5-Diethoxyphosphoryl-5-methyl-1-pyrrolin-1-oxid, 5-Phosphono-5-methyl-1-pyrrolin-1-oxid, 5-Diethoxyphosphoryl-5-methyl-(2,3,3-²H₃)-1-pyrrolin-1-oxid.

5. Verfahren zur Herstellung von Verbindungen der allgemeinen Formel I nach Anspruch 1, gekennzeichnet durch die Oxidation einer Verindung der allgemeinen Formel III: 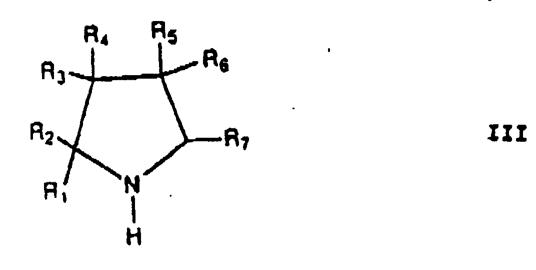 worin R₁ bis R₇ die vorstehende Bedeutung haben.

6. Verfahren nach Anspruch 5, wobei das Oxidationsmittel m-Chlorbenzoesäure ist.

7. Verfahren nach Anspruch 5, wobei das Oxidationsmittel ein Wasserstoffperoxid/Selenoxid-System ist.

8. Verfahren nach Anspruch 5, wobei das Oxidationsmittel Dimethyldioxiran ist.

9. Verfahren nach Anspruch 5, wobei das Oxidationsmittel Natriumwolframat ist.

10. Verfahren zur Herstellung von Verbindungen der allgemeinen Formel I 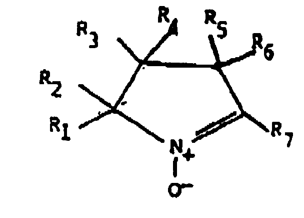 worin:
R₁ einen Phenyl- oder (C₁-C₁₈)-Alkylrest darstellt,
R₂, R₃, R₄ und R₅ unabhängig voneinander ein Wasserstoffatom, ein Deuteriumatom, eine Phenylgruppe oder einen(C₁-C₁₈)-Alkylrest darstellen, und
R₆ einen Rest Z₂ der Formel darstellt 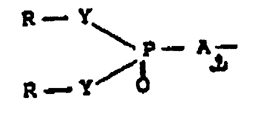 worin A₂ eine Einfachbindung darstellt, und wenn Y ein Sauerstoffatom darstellt, R ein Wasserstoffatom, einen (C₁-C₁₈)-Alkyl- oder (C₆-C₁₈)-Arylrest darstellt, oder wenn Y eine Methylengruppe darstellt, R ein Wasserstoffatom, einen (C₁-C₁₇)-Alkyl- oder (C₆-C₁₆)-Arylrest darstellt,
sowie ihre entsprechenden physiologisch verträglichen Salze, die durch Einwirkung einer anorganischen oder organischen Base erhalten werden, dadurch gekennzeichnet, daß die der Formel XI entsprechende Verbindung 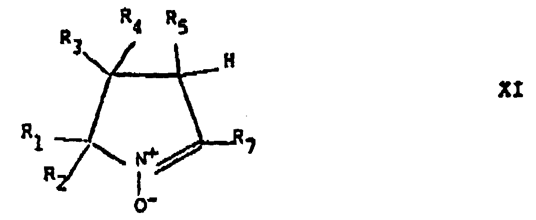 worin R₁ bis R₇ wie vorstehend definiert sind, behandelt wird mit
i) entweder Natriumhydrid und dann mit einer Verbindung der Formel X umgesetzt wird 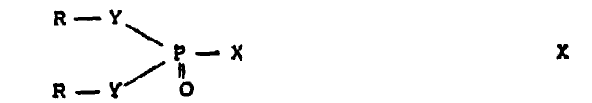 worin X ein Halogenatom darstellt und R und Y wie vorstehend definiert sind,
ii) oder nacheinander mit N-Bromsuccinimid und einer Verbindung der Formel P(YR)₃, worin Y und R wie vorstehend definiert sind.

11. Verbindung, die zum Gebrauch in der Kosmetologie bestimmt ist, umfassend als Wirkstoff mindestens eine Verbindung nach einem der Ansprüche 1 bis 4.

12. Diagnostische Zusammensetzung, die zur Bestimmung von oxidativem Streß geeignet ist, umfassend mindestens eine Verbindung nach einem der Ansprüche 1 bis 4.

13. Diagnosekit zur Bestimmung von oxidativem Streß, dadurch gekennzeichnet, daß es mindestens eine Verbindung nach einem der Ansprüche 1 bis 4 umfaßt.

## Claims

1. Compound of the general formula I: 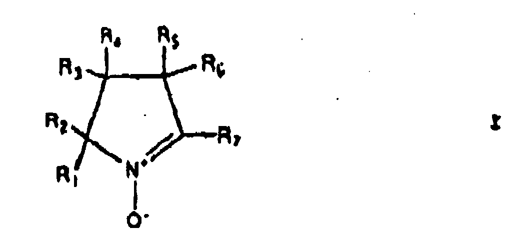 in which:
R₁ represents a phenyl or else a (C₁-C₁₈) alkyl,
R₂ represents an atom of hydrogen, of deuterium, a phenyl group, a (C₁-C₁₈) alkyl, a radical Z₁ of the formula 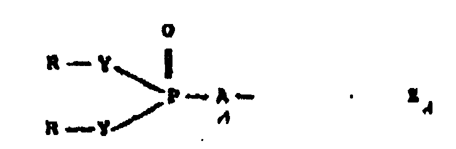 in which:
A₁ is a single bond, a methylene group or an oxamethylene group (where the atom of oxygen is connected to the atom of phosphorus of the radical Z₁), Y represents an atom of oxygen and R represents an atom of hydrogen, a (C₁-C₁₈) alkyl or a (C₆-C₁₈) aryl or else Y represents a methylene group and R represents an atom of hydrogen, a (C₁-C₁₇) alkyl or a (C₆-C₁₈) aryl,
R₃, R₄ and R₅ represent independently from one another an atom of hydrogen, of deuterium, a phenyl group or a (C₁-C₁₈) alkyl group and R₆ represents an atom of hydrogen, of deuterium, a phenyl group, a (C₁-C₁₈) alkyl group or a radical Z₂ of the formula 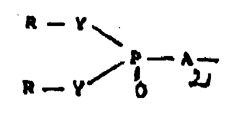
A₂ representing a simple bond and Y and R being as defined previously, R₇ represents an atom of hydrogen, of deuterium or a methyl group,
with the reservation that when R₂ represents Z₁, R₆ does not represent Z₂, and their physiologically acceptable corresponding salts obtained by reaction with a mineral or organic base.

2. Compounds according to claim 1 of the formula II: 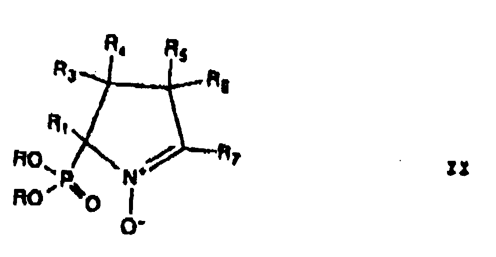 in which:
R represents a hydrogen atom, a (C₁-C₁₈) alkyl, or a (C₆-C₁₈) aryl,
R₁ represents a phenyl or else a (C₁-C₁₈) alkyl,
R₃, R₄, R₅ and R₆ represent independently of one another an atom of hydrogen, of deuterium, a phenyl group or a (C₁-C₁₈) alkyl group, and R₇ represents an atom of hydrogen, of deuterium or a methyl group.

3. Compounds of the formula II according to claim 2
in which R₁ is a methyl group and R₇ is an atom of hydrogen or of deuterium.

4. Compound according to any of the claims 1 to 3,
characterised in that
it is selected from:
5-diethoxyphosphoryl-5-methyl-1-pyrroline-1-oxide,
5-phosphono-5-methyl-pyrroline-1-oxide,
5-diethoxyphosphoryl-5-methyl-(2, 3, 3-²H₃)-1-pyrroline-1-oxide.

5. Method for preparing a compound of the general formula I according to claim 1,
characterised in that
a compound of the general formula III is oxidised 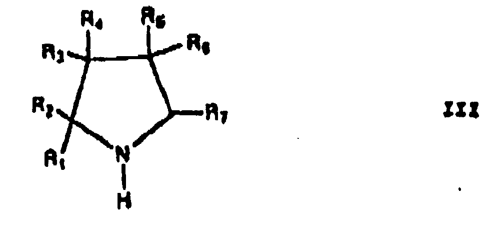 in which R₁ to R₇ have the same meaning as above.

6. Method according to claim 5
in which the oxidising agent is m-chloroperbenzoic acid.

7. Method according to claim 5
in which the oxidising agent is the system hydrogen peroxide/oxide of selenium.

8. Method according to claim 5
in which the oxidising agent is dimethyldioxirane.

9. Method according to claim 5
in which the oxidising agent is sodium tungstate.

10. Method for preparing compounds of the general formula I 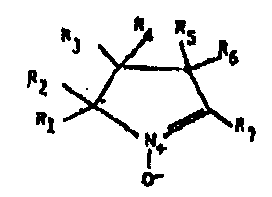 in which
R₁ represents a phenyl or else a (C₁-C₁₈) alkyl,
R₂, R₃, R₄, and R₅ represent independently of one another an atom of hydrogen, of deuterium, a phenyl group or a (C₁-C₁₈) alkyl group, and R₆ represents a radical Z₂ of the formula 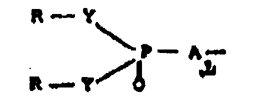 in which A₂ represents a single bond and when Y represents an atom of oxygen, R represents an atom of hydrogen, a (C₁-C₁₈) alkyl or a (C₆-C₁₈) aryl, or else when Y represents a methylene group R represents an atom of hydrogen, a (C₁-C₁₇) alkyl or a (C₆-C₁₈) aryl, and their physiologically acceptable corresponding salts obtained by reaction with a mineral or organic base,
characterised in that
the corresponding compound of formula XI, 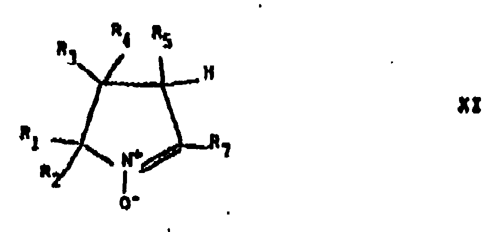 in which R₁ to R₇ are as they were defined previously, is treated
i) either with sodium hydride before being allowed to react with a compound of formula X 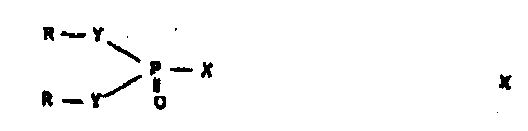 in which X represents a halogen and R and Y are as they were defined previously,
ii) or successively with N-bromosuccinimide and a compound of formula P(YR)₃ in which Y and R are as defined previously.

11. Composition intended for use in cosmetology comprising as an active ingredient at least one compound according to any of the claims 1 to 4.

12. Diagnostic composition utilisable in the evaluation of oxidative stress comprising at least one compound according to any of the claims 1 to 4.

13. Diagnostic kit for the evaluation of oxidative stress,
characterised in that
it comprises at least one compound according to one of the claims 1 to 4.
